# EUROPEAN PATENT SPECIFICATION

(11) **EP 2 346 641 B1**
(45) Date of publication and mention of the grant of the patent: **11.04.2018**
(21) Application number: 09752339.3
(22) Date of filing: 09.11.2009
(51) Int. Cl.: B23K 26/38, B23K 37/04, B25B 11/00

(54) **SUPPORT TABLE FRAME FOR HIGH SPEED LASER BLANKING**
TISCHRAHMEN ZUM HOCH-GESCHWINDIGKEIT-LASER-STANZEN
CADRE DE TABLE DE SUPPORT DE PIÈCE POUR LA DÉCOUPE AU LASER À HAUTE VITESSE

(30) Priority: 18.11.2008 US 115731 P
(43) Date of publication of application: 27.07.2011
(73) Proprietor: L'Air Liquide Société Anonyme pour l'Etude et l'Exploitation des Procédés Georges Claude, 75007 Paris (FR)
(72) Inventor: CARISTAN, Charles L., Houston, TX 77077 (US)
(74) Representative: Debecker, Isabelle Virginie
(86) International application number: PCT/EP2009/064803
(87) International publication number: WO 2010/057794

(56) References cited:
- EP-A1- 0 461 064
- EP-A1- 1 467 845
- EP-A2- 1 238 746
- DE-A1- 10 019 368
- DE-U1- 20 319 159
- US-A- 5 758 869

## Description

The present invention relates to a support table frame for high speed laser blanking.

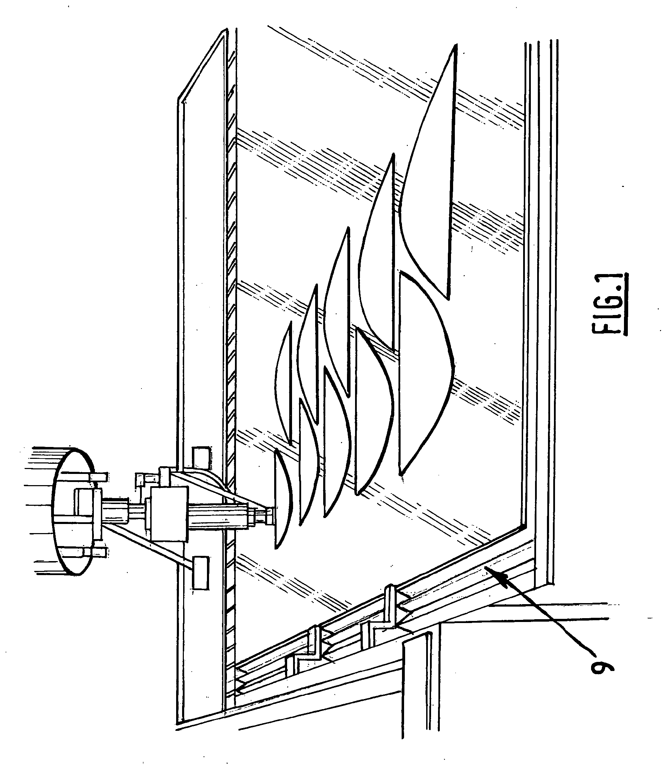

Figure 1 shows a traditional grid table for laser cutting operations. Grids 9 of toothed bridges for blank support, sitting across the table, are consumable structures and act only as bottom support for blank parts.

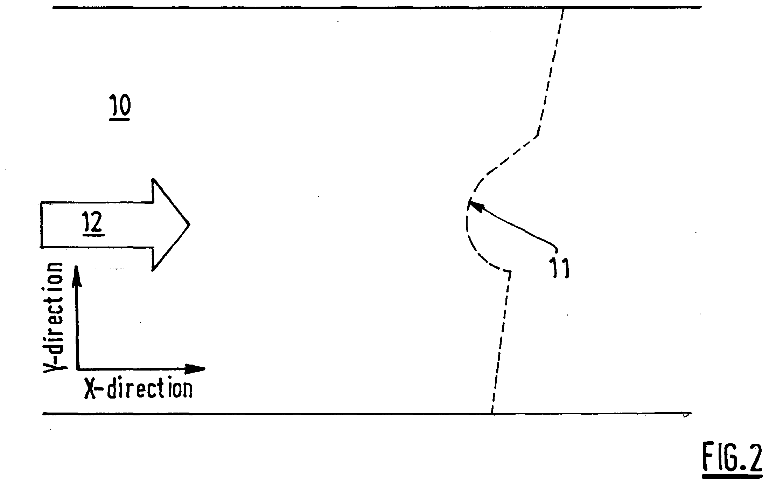

However, prior art grids do not hold the material down and in place during cutting of the flat metal 10 along the cutting line 11, as represented on Figure 2, which can lead to cutting and/or quality issues when, for instance, the material's surface moves during cutting due to heat distortion or residual stress, or mechanical stress and/or thermal stress induced in the material during cutting.

Furthermore, the teeth of the support-grid structure are sometimes on the cutting path of the laser beam which sometimes can yield cutting quality defects such as burr, dross, loss of cut, gouging, etc...

Document EP-A-1 467 845 discloses a laser cutting apparatus, wherein a sheet of material to be cut is secured by a vacuum action and mounted on the support means by locating pins.

Document US-A-5758869 discloses a work rest for use on a program-controlled machine having a plurality of work rest rails and a plurality of vacuum chucks movable disposed on said plurality or work rest rails The problem to be solve is to propose an improved apparatus and a process for high speed laser blanking.

The solution of the present invention is an apparatus for laser cutting in accordance with claim 1. Depending on the embodiment, the apparatus of the present invention can comprise one or several of the following features :
- the apparatus comprises several bridge rail modules, each bridge rail module comprising several suction cup modules.
- each suction cup module is in fluid connection with at least a vacuum source.
- the support table frame is flat.
- said bridge rail modules are parallel to each another.
- the apparatus further comprises a motion mechanism for moving a plate to be cut along the X-axis.
- the support table frame presents the surface of the substantially flat workpiece to be cut in a non-horizontal position during cutting.
- the support table frame presents the surface of the substantially flat workpiece to be cut in a vertical position during cutting.

The present invention also concerns a process for laser cutting a metal plate in accordance with claim 9. Depending on the embodiment, the process of the present invention can comprise one or several of the following features :
- the metal plate is a metal coil.
- the metal plate is cut in one master blank or in several blank pieces.
- the workpiece is fed from a metal coil to be first cut by a first cutting machine into at least one peripheral blank and subsequently the peripheral blank is fed to a second cutting machine to be cut into several smaller individual final blanks.

The present invention will be explained in details in the following description made in connection with the enclosed Figures.

One embodiment of the invention concerns a heavy duty rigid support table frame (of X-Y axis) for high speed laser blanking operations, in particular laser cutting, comprising one or several bridge rail modules 1 running across the support table frame's Y-axis, each equipped with one or preferably several suction cup modules 2. These suction cup modules 2 are use for creating a vacuum, i.e. a pressure less than the pressure of the surrounding atmosphere, between said suction cup and the surface of the material, and thus firmly holding the workpiece to be cut in stationary position during cutting.

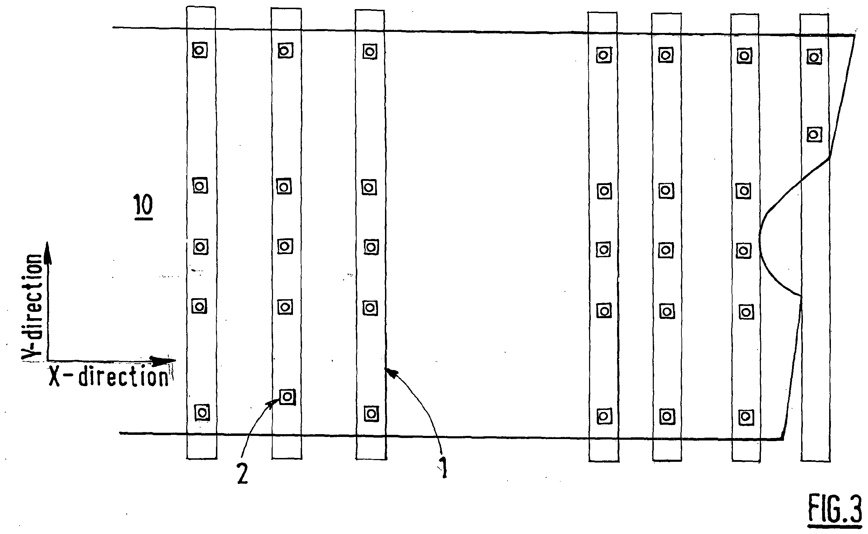

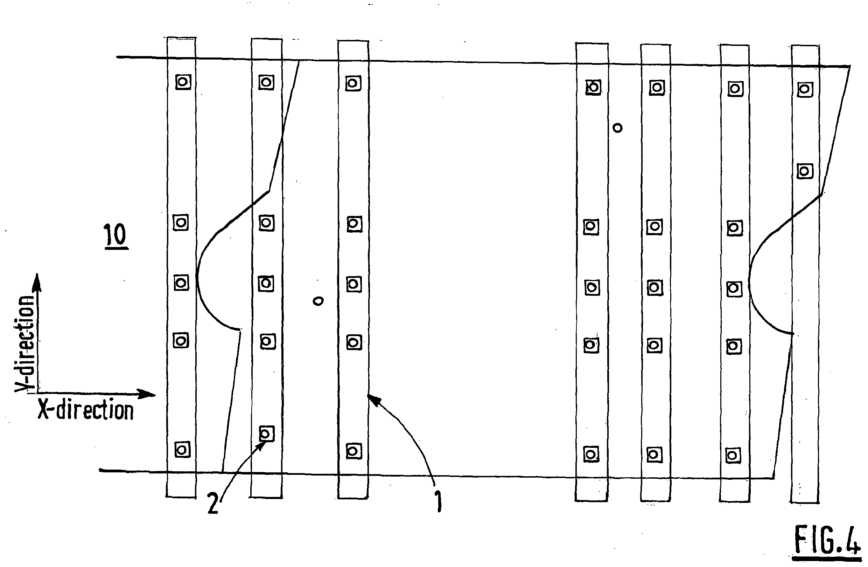

More precisely, Figures 3 and 4 represent a top view of a metal plate 10 (coil) disposed on an engineered table according to an embodiment of the present invention that comprises four bridge rail modules 1 comprising a total of seventeen suction cups modules 2. Those of ordinary skill in the art will recognize that the number of bridge rail modules 1 can be greater than or lower than 4. The bridge rail modules 1 are preferably parallel one to the other, but can be designed also in different orientations with respect to the Y-axis direction.. These bridge rail modules are fixed in position on the engineered table before the workpiece to be cut is brought on it. Once the workpiece is in stationary position, the suction cup modules are activated to provide sufficient suction to hold down the material in place during cutting.

Figures 2, 3 and 4 show an example of a continuous coil feed presenting a workpiece progression above the engineered table. The workpiece is stopped periodically at the end of each progression.

In Figures 3, the bridge rail modules of the engineered table are shown in position immediately before the start of a new cut, whereas in Figure 4 shows the same immediately after the end of a new cut line 11 and cut positioning holes 3. To enable such workpiece feed and stop periodic motion, a coil retardation loop can be put in place such as that which is standard in continuous coil die-blanking operations. The laser cut has been done in the flat metal-plate 10 (coil) between two successive bridge rail modules 1. Furthermore, two reference locator holes 3 have been also cut through the metal plate 10 forming the blank.

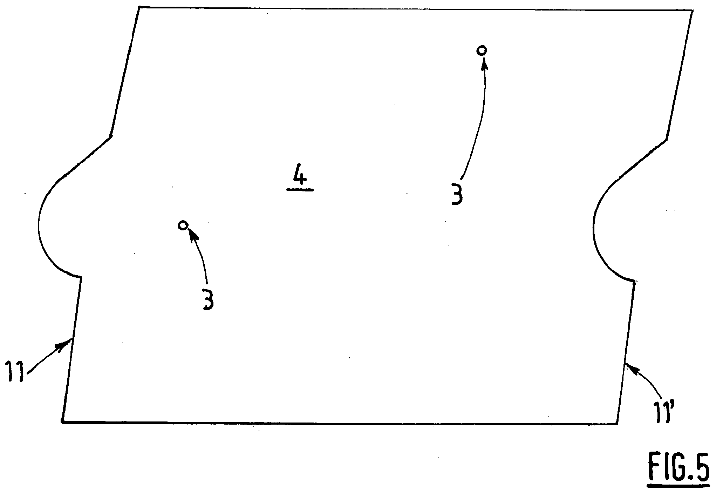

Figure 5 shows the peripheral blank 4 obtained after the laser cutting operation of Figure 4. This peripheral blank 4 has been laser cut at its ends along desired cutting lines 11, 11'. Lines 11' and 11 have been obtained during two successive cuts, respectively, as illustrated in Figures 3 and 4, and explained above. The peripheral blank 4 further comprises the two reference locator holes 3. Those of ordinary skill in the art will recognize that the number of reference locator holes 3 can differ from 2.

Instead of a traditional grid of consumable toothed bar bridge, it is proposed according to one embodiment of the present invention, to have a heavy duty universal flexible engineered table that not only provides the minimum material support necessary for a laser-cutting machine even if not optionally equipped with a height sensor closed-loop profiling, but also means for holding the material in place during cutting. The frame of the table should be of heavy duty construction. It should have X-axis guides along at least one X-axis side. In addition, it should be able to sustain direct or reflected laser irradiation without suffering from excessive heat distortion. If so wished, the bridge rail modules can be oriented parallel to either X or Y axis.

Such an engineered table will need to comprise many needed bridge rail modules 1 running across its Y-axis (parallel to the Y-axis or otherwise). These bridge rail modules 1 are slidable along the X-axis rails of the table frame to allow, for positioning anywhere along the X-axis of the table. Each bridge rail module 1 can easily be removed from the table for cleaning and/or maintenance and set-up. These bridge rail modules 1 are heavy duty rigid structures that should be designed as narrow as possible so that detached scrap parts can fall through and be collected by a scrap conveyor underneath the table. If necessary, the part program may add additional cut sequences, to cut the engineering scrap into smaller pieces that can easily fall through the grid of bridge rail modules for evacuation and collection. These modules 1 may also include channels for an optional water cooling system. Optionally, engineered scrap pieces that do not fall can be evacuated and collected through different pre-engineered means.

Each bridge rail module 1 comprises heavy duty suction cup modules 2 and location pin modules 5 that are slidable along the bridge rail. As many suction cups 1 and location pin modules 5 as needed can be used as along as they can spatially fit in a given bridge rail module 1.

The engineered table frame, bridge rail modules 1 and suction cup modules 2 have adequate machined surfaces that can be flat or not in order to provide local part support and also have suction which provides the equivalent of clamping tension to hold the material in place, i.e. the metal plate 10 to be cut, including providing tension in spaces between suction cup modules 2. The support surfaces of these modules 2 also serve as reference height surface for the blanks 4 that rest on them. The support surfaces are elevated with respect to the surface of the bridge rail module.

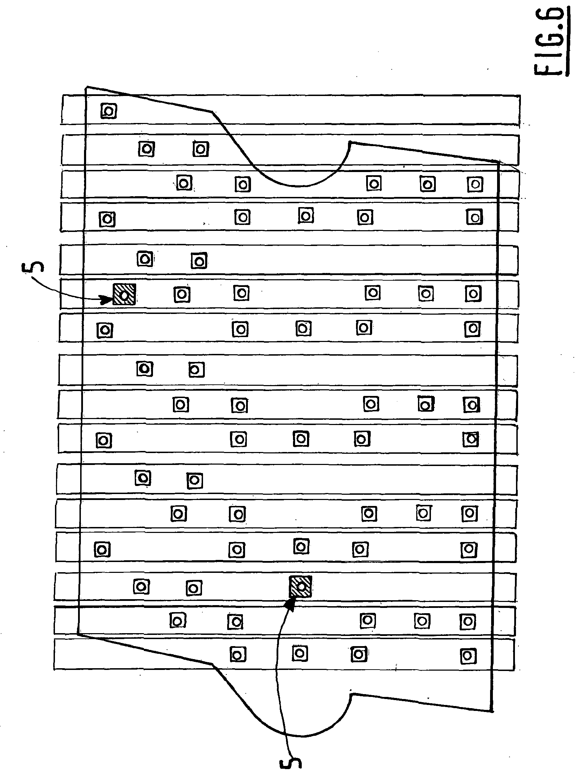

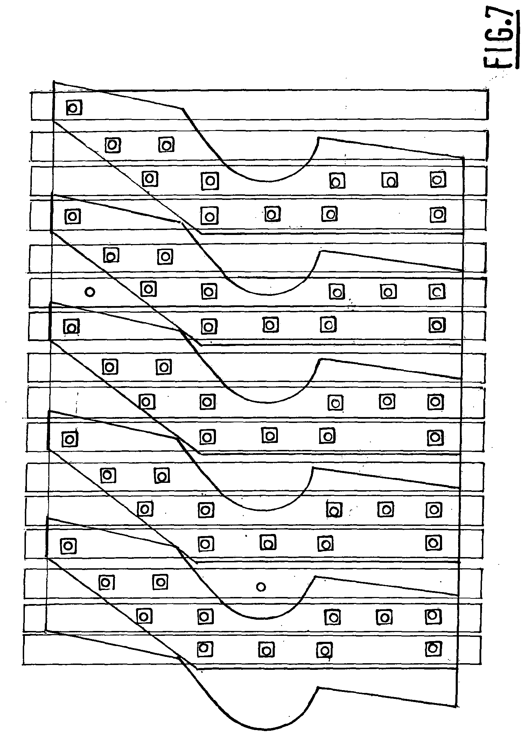

Figures 6 and 7 show another embodiment of the present invention, wherein some of the bridge rail modules 1 comprise pin location modules 5 that are used for detecting/locating the reference locator holes 3 that have been pierced through the metal plate 10 forming the blank 4 as explained above.

Fig. 5 and 6 represent the peripheral blank 4 detached from the coil-feed station and before it is further cut into a multitude of smaller blank pieces, whereas Figure 7 represents the position of the multitude of smaller blank pieces 6 cut in the blank 4.

These suction cups 2 and pin location modules 5 are located strategically as a function of the nesting and of the part program path of the laser head. The path 12 of the cutting focusing head should preferably never go across a suction cup module 2 when the laser is on. This eliminates the parts from tipping over without falling and also the parts from sticking out as a collision object on the path of the cutting head. It also avoids material moving from its position induced by heat input thermal displacements or residual stress spring back which could lead to parts being cut out of dimensional accuracy tolerances.

These suction cups 2 and pin locator modules 5 should be easy to change for cleaning, maintenance or repair purposes. The whole table is rigid and can be leveled at installation so that all suction cup modules 2 surfaces are at the same reference height surface on which the peripheral blank 4 rests. Small height changes are acceptable on the work envelope as long as they do not scratch the workpiece, nor permanently deform it, and as long as the slope of height difference does not exceed 0.5 mm per 20 mm travel across the work envelope.

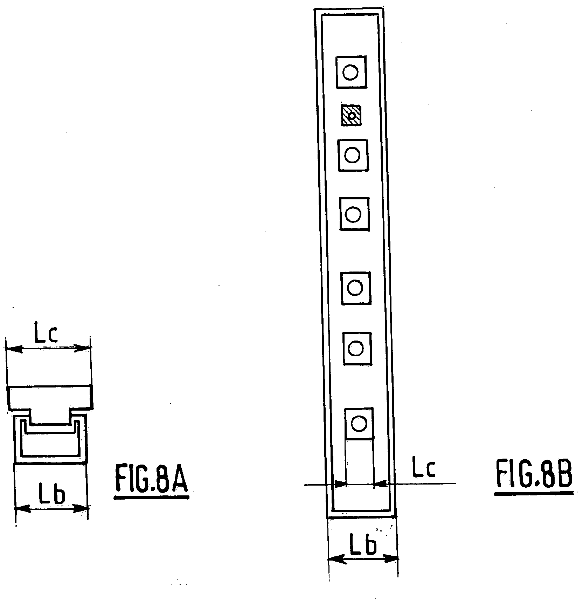

As illustrated in Figure 8A, all elements of the suction cup modules are machined to present a leveled reference surface of the suction cup upon which the workpiece rests under suction hold down. These elements can be circular, square or any appropriate and adequate shape and have a width Lc. Quick disconnects for compressed gas or air feed and return are an option.

The suction cup modules 2 are in fluid connection with at least a vacuum source, such as a vacuum pump or any other vacuum device able to create an under-pressure, i.e. a pressure less than the pressure of the atmosphere (< 1 atm), and to thus obtain a suction effect in the suction cup modules 2 allowing a firm holding of the piece to be cut.

As illustrated in Figure 8B, each bridge rail module 1 must be rigid as it will serve as a reference height surface. The bridge rail module 1 must also be heavy duty and easy to clean for purposes of maintenance. The width Lc of the suction cup module 2 reference surface can be either smaller than or larger than the width (or diameter if cylindrical) Lb of the bridge rail module. On an engineered table, suction cup modules 2 can have different sizes and shapes but should be set-up such that all present adequate reference surface position (s) upon which the blank rests. While, in most cases, the engineered table presents the workpiece in a horizontal position, during cutting, alternatively, the present invention includes set-ups in which the engineered table can present the workpiece surface in a non-horizontal position or even a vertical position during laser cutting.

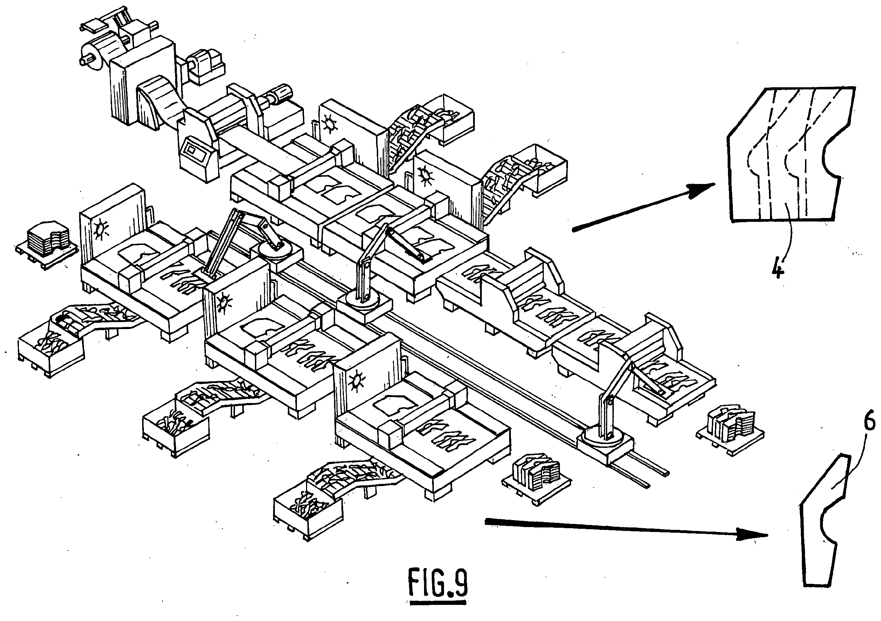

Figure 9 represents an embodiment of a high speed laser blanking installation that can be equipped with the apparatus of the present invention. As one can see, the installation comprises two lines: a first line 20 or coil-fed station for detaching the peripheral blanks 4, and a second line 21 or blank-fed station for detaching the final individual parts or blank pieces 6 obtained from further cutting of the peripheral blanks obtained with the first line 20.

One laser at the coil-fed station 20 generally has a cycle time per final part shorter than even press die-blanking. Therefore for a line balancing cycle time point of view, one does not need two laser machines at the coil-fed station 20. However, it would allow redundancy during downtime for set-up, maintenance and repair of the laser machines. However, it is recommended to use at least two laser machines at the blank-fed station 21.

During the cutting operations, the peripheral blank 4 or the final individual part pieces 6 to be cut are firmly held by means of an (or several) apparatus according to the present invention equipped with suction modules 2 arranged on bridge rail modules 1 that preferably further also comprise location pin modules 5, especially when used in the blank-fed station 21.

In other words, the workpiece is fed from a metal coil to be first cut by a first cutting machine into at least one peripheral blank and subsequently the peripheral blank is fed to a second cutting machine to be cut into several smaller individual final blanks.

A total laser blanking system with a total of six laser machines has a throughput equivalent to that of a press line. Each laser machine needs to utilize a maximized "beam-on" value adding time, i.e., the material handling must wait for the laser cutting and not the other way around.

For the blank-fed station, the laser cutting machines preferably have dual tables, i.e., one side laser cuts while the other side is being loaded / unloaded.

The coil-fed station detaches peripheral blank contours, and if it is laser-cutting, it can make additional cuts, preferably without detaching any offal. This enables balancing the length of cutting between coil-fed and blank-fed stations.

Cutting per each progression of the coil generally takes several seconds, typically 3 to 4 sec., thus enabling ample time for material handling to evacuate or stack the detached peripheral blank contour.

By designing with this concept, the coil-fed station preferably does not generate detached offal, and therefore is not potentially hampered or slowed down by the time needed to evacuate offal. The coil support system during cutting is then simplified for the laser machines of the coil-fed station.

The apparatus comprises a motion mechanism for moving a plate to be cut along the X-axis. Such king of motion mechanism is well-known in the art.

Further, the apparatus also can comprise other well-known elements used for laser cutting, such as one (or several):
- laser generator for generating a laser beam, like a fiber laser generator,
- laser cutting head that is used for cutting the workpieces,
- gas source, such as a gas conduit and/or a gas cylinder or storage vessel, for containing and feeding an assist gas or gas mixture to the laser head that is used for assisting said laser beam during cutting,
- device for moving the laser cutting head with respect to the workpiece so as to operate a cutting along the desired trajectory(ies),
- a control device, such as a CNC or similar, for piloting the laser head,
- etc...

## Claims

1. Apparatus for laser cutting a blank, said apparatus comprising:
- at least one laser cutting head
- a rigid support table frame having an X-axis and an Y-axis, and
- one or several bridge rail modules (1) running across the Y-axis of said table frame,
**characterized in that** each bridge rail module (1) comprises at least one suction cup module (2) and at least one pin locator module (5), said suction cup modules (2) and pin locator modules (5) being slidable along the bridge rail module (1).

2. Apparatus according to Claim 1, wherein the apparatus comprises several bridge rail modules (1), each bridge rail module (1) comprising several suction cup modules (2).

3. Apparatus according to Claim 1 or 2, **characterized in that** each suction cup module (2) is in fluid connection with at least a vacuum source.

4. Apparatus according to any of the preceding Claims, **characterized in that** the support table frame is flat.

5. Apparatus according to any of the preceding Claims, **characterized in that** said bridge rail modules (1) are parallel to each another.

6. Apparatus according to any of the preceding Claims, **characterized in that** the apparatus further comprises a motion mechanism for moving a plate to be cut along the X-axis.

7. Apparatus according to any of the preceding Claims, **characterized in that** the support table frame presents the surface of the substantially flat workpiece to be cut in a non-horizontal position during cutting.

8. Apparatus according to any of the preceding Claims, **characterized in that** the support table frame presents the surface of the substantially flat workpiece to be cut in a vertical position during cutting.

9. Process for laser cutting a metal plate, comprising the steps of:
a) providing a laser cutting device,
b) providing a metal plate to be cut,
and c) cutting said metal plate along a cutting path (12) by means of a laser beam delivered by the laser cutting, **characterized by** the step of:
d) providing an apparatus according to Claim 1 for vacuum suction holding and maintaining the metal plate,
wherein said metal plate is vacuum suction held and maintained in position by one or several bridge rail modules of said apparatus, each comprising at least one suction cup module and at least one pin locator module (5) that are slidable along the bridge rail module (1), the process comprising a step of adjusting, as a function of the cutting path (12), the position of said suction cup modules (2) and pin locator modules (5) along the bridge rail module (1).

10. Process according to Claim 9, **characterized in that** the metal plate is a metal coil.

11. Process according to Claim 9 or 10, **characterized in that** the metal plate is cut in one master blank or in several blank pieces.

12. Process according to any one of Claims 9 to 11, **characterized in that** the workpiece is fed from a metal coil to be first cut by a first cutting machine into at least one peripheral blank and subsequently the peripheral blank is fed to a second cutting machine to be cut into several smaller individual final blanks.

13. Process according to any one of Claims 9 to 12, **characterized in that** reference locator holes (3) are pierced through the workpiece.

## Patentansprüche

1. Vorrichtung zum Laserschneiden eines Rohlings, wobei die Vorrichtung Folgendes umfasst:
- mindestens einen Laserschneidkopf
- einen biegesteifen Tischstützrahmen, der eine X-Achse und eine Y-Achse aufweist, und
- einen oder mehrere Brückenschienenmodule (1), die über die Y-Achse des Tischrahmens verlaufen,
**dadurch gekennzeichnet, dass** jedes Brückenschienenmodul (1) mindestens ein Gummisaugermodul (2) und mindestens ein Stiftfindermodul (5) umfasst, wobei die Gummisaugermodule (2) und Stiftfindermodule (5) entlang des Brückenschienenmoduls (1) gleitbar sind.

2. Vorrichtung nach Anspruch 1, wobei die Vorrichtung mehrere Brückenschienenmodule (1) umfasst, wobei jedes Brückenschienenmodul (1) mehrere Gummisaugermodule (2) umfasst.

3. Vorrichtung nach Anspruch 1 oder 2, **dadurch gekennzeichnet, dass** jedes Gummisaugermodul (2) in Flüssigkeitsverbindung mit mindestens einer Vakuumquelle steht.

4. Vorrichtung nach einem der vorstehenden Ansprüche, **dadurch gekennzeichnet, dass** der Tischstützrahmen flach ist.

5. Vorrichtung nach einem der vorstehenden Ansprüche, **dadurch gekennzeichnet, dass** die Brückenschienenmodule (1) parallel zueinander sind.

6. Vorrichtung nach einem der vorstehenden Ansprüche, **dadurch gekennzeichnet, dass** die Vorrichtung weiter einen Bewegungsmechanismus zum Bewegen einer Platte, die geschnitten werden soll, entlang der X-Achse umfasst.

7. Vorrichtung nach einem der vorstehenden Ansprüche, **dadurch gekennzeichnet, dass** der Tischstützrahmen die Fläche des im Wesentlichen flachen Werkstücks, das geschnitten werden soll, in einer nichthorizontalen Position beim Schneiden präsentiert.

8. Vorrichtung nach einem der vorstehenden Ansprüche, **dadurch gekennzeichnet, dass** der Tischstützrahmen die Fläche des im Wesentlichen flachen Werkstücks, das geschnitten werden soll, in einer vertikalen Position beim Schneiden präsentiert.

9. Verfahren zum Laserschneiden einer Metallplatte, umfassend die Schritte des:
a) Bereitstellens einer Laserschneidvorrichtung,
b) Bereitstellens einer zu schneidenden Metallplatte, und
c) Schneidens der Metallplatte entlang eines Schneidwegs (12) mittels eines Laserstrahls, der durch das Laserschneiden abgegeben wird,
**gekennzeichnet durch** die Schritte des:
d) Bereitstellens einer Vorrichtung nach Anspruch 1 zum Halten der Vakuumansaugung und Aufrechterhalten der Metallplatte,
wobei die Metallplatte durch Vakuumansaugung in Position gehalten und durch ein oder mehrere Brückenschienenmodule der Vorrichtung aufrechterhalten wird, wobei jedes davon mindestens ein Gummisaugermodul und mindestens ein Stiftfindermodul (5) umfasst, die entlang des Brückenschienenmoduls (1) gleitbar sind, wobei das Verfahren einen Schritt des Einstellens der Position der Gummisaugermodule (2) und Stiftfindermodule (5) entlang des Brückenschienenmoduls (1) als eine Funktion des Schneidwegs (12) umfasst.

10. Verfahren nach Anspruch 9, **dadurch gekennzeichnet, dass** die Metallplatte eine Metallspule ist.

11. Verfahren nach Anspruch 9 oder 10, **dadurch gekennzeichnet, dass** die Metallplatte in einen Hauptrohling oder in mehrere Rohlingstücke geschnitten wird.

12. Verfahren nach einem der Ansprüche 9 bis 11, **dadurch gekennzeichnet, dass** das Werkstück von einer Metallspule zugeführt wird, um zunächst durch eine Schneidmaschine in mindestens einen peripheren Rohling geschnitten zu werden und anschließend der periphere Rohling einer zweiten Schneidmaschine zugeführt wird, um in mehrere kleinere, einzelne, endgültige Rohlinge geschnitten zu werden.

13. Verfahren nach einem der Ansprüche 9 bis 12, **dadurch gekennzeichnet, dass** Referenzfinderlöcher (3) durch das Werkstück durchgestochen werden.

## Revendications

1. Appareil pour la découpe au laser d'une ébauche, ledit appareil comprenant :
- au moins une tête de découpe au laser
- un cadre de table de support rigide ayant un axe X et un axe Y, et
- un ou plusieurs modules de rail de pont (1) s'étendant à travers l'axe Y dudit cadre de table,
**caractérisé en ce que** chaque module de rail de pont (1) comprend au moins un module de ventouse (2) et au moins un module de localisation de broche (5), lesdits modules de ventouse (2) et modules de localisation de broche (5) étant coulissants le long du module de rail de pont (1).

2. Appareil selon la revendication 1, dans lequel l'appareil comprend plusieurs modules de rail de pont (1), chaque module de rail de pont (1) comprenant plusieurs modules de ventouse (2).

3. Appareil selon la revendication 1 ou 2, **caractérisé en ce que** chaque module de ventouse (2) est en connexion fluidique avec au moins une source de vide.

4. Appareil selon l'une quelconque des revendications précédentes, **caractérisé en ce que** le cadre de table de support est plat.

5. Appareil selon l'une quelconque des revendications précédentes, **caractérisé en ce que** lesdits modules de rail de pont (1) sont parallèles l'un à l'autre.

6. Appareil selon l'une quelconque des revendications précédentes, **caractérisé en ce que** l'appareil comprend en outre un mécanisme de mouvement pour déplacer une plaque à découper suivant l'axe X.

7. Appareil selon l'une quelconque des revendications précédentes, **caractérisé en ce que** le cadre de table de support présente la surface de la pièce à usiner sensiblement plate à découper dans une position non-horizontale pendant la découpe.

8. Appareil selon l'une quelconque des revendications précédentes, **caractérisé en ce que** le cadre de table de support présente la surface de la pièce à usiner sensiblement plate à découper dans une position verticale pendant la découpe.

9. Procédé de découpe au laser d'une plaque métallique, comprenant les étapes de :
a) fourniture d'un dispositif de découpe au laser,
b) fourniture d'une plaque métallique à découper, et
c) découpe de ladite plaque métallique le long d'un trajet de découpe (12) au moyen d'un faisceau laser fourni par la découpe au laser,
**caractérisé par** l'étape de :
d) fourniture d'un appareil selon la revendication 1 pour retenir et maintenir par aspiration par vide la plaque métallique,
dans lequel ladite plaque métallique est retenue et maintenue par aspiration par vide en position par un ou plusieurs modules de rail de pont dudit appareil, comprenant chacun au moins un module de ventouse et au moins un module de localisation de broche (5) qui sont coulissants le long du module de rail de pont (1), le processus comprenant une étape d'ajustage, en fonction du trajet de découpe (12), de la position desdits modules de ventouse (2) et modules de localisation de broche (5) le long du module de rail de pont (1).

10. Procédé selon la revendication 9, **caractérisé en ce que** la plaque métallique est une bobine métallique.

11. Procédé selon la revendication 9 ou 10, **caractérisé en ce que** la plaque métallique est découpée en une ébauche maîtresse ou en plusieurs pièces d'ébauche.

12. Procédé selon l'une quelconque des revendications 9 à 11, **caractérisé en ce que** la pièce à usiner est amenée à partir d'une bobine métallique pour être d'abord découpée par une première machine de découpe en au moins une ébauche périphérique et ensuite l'ébauche périphérique est amenée à une deuxième machine de découpe pour être découpée en plusieurs ébauches finales individuelles plus petites.

13. Procédé selon l'une quelconque des revendications 9 à 12, **caractérisé en ce que** des trous de localisation de référence (3) sont percés dans la pièce à usiner.
